# EUROPEAN PATENT SPECIFICATION

(11) **EP 0 915 325 B1**
(45) Date of publication and mention of the grant of the patent: **10.11.2004**
(21) Application number: 98120230.2
(22) Date of filing: 26.10.1998
(51) Int. Cl.: G01G 17/06, G06F 17/60

(54) **A method for replenishing containers in a storage rack**
Verfahren zur Nachfüllung von Behälter in einem Lagerregal
Procédé pour le remplissage de récipients dans une étagère de stockage

(30) Priority: 10.11.1997 EP 97119652
(43) Date of publication of application: 12.05.1999
(73) Proprietor: Bossard AG, 6301 Zug (CH)
(72) Inventor: Muncy Henderson, Irving D., 6312 Steinhausen (CH); Grob, Beat J., CH-6330 Cham (CH)
(74) Representative: Blum, Rudolf Emil Ernst

(56) References cited:
- WO-A-91/18326
- WO-A-96/31833
- GB-A- 2 299 074
- US-A- 3 930 258
- US-A- 4 524 886
- PATENT ABSTRACTS OF JAPAN vol. 096, no. 010, 31 October 1996 & JP 08 161615 A (OMRON CORP), 21 June 1996
- PATENT ABSTRACTS OF JAPAN vol. 008, no. 072 (P-265), 4 April 1984 & JP 58 217078 A (AKIYOSHI KURIHARA), 16 December 1983

## Description

The invention relates to a method for maintaining a storage comprising several containers according to the preamble claim 1. Such a method is described in GB 2 299 074.

Storages with several containers can be used for storing small articles, such as screws, nuts, bolts, electrical components, fasteners or pills or for storing different liquids. Usually, each container of the storage holds one type of article or liquid. During normal operation the containers are slowly being emptied. For instance, screws and nuts are being removed from the bins of the storage for assembling devices in a factory. As soon as a container is empty, it has to be refilled, e.g. by replenishing it from a central store or by reordering articles from an external supplier.

Monitoring the containers for the need of replenishing is a time consuming and costly task. If it is not carried out with care, an empty container may e.g. interrupt the operation of a whole assembly line. Depending on the rate of inspection of the containers, a large inventory of articles may have to be stored on-site to avoid shortages. Patent Abstracts of Japan, vol. 96, no. 010, 31 October 1996 for JP 08 161615 describes a vending machine for beverages with several containers for liquids. The weights of the containers are measured and the residual amount of each liquid is shown on a display in real time. This dispenses with the need of opening the machine for checking the containers. Still, the display must be monitored carefully.

It is an object of the present invention to provide a method and a storage of the type mentioned above that allows a secure and timely but economical replenishing of the containers.

This object is reached by the method and storage described in the independent claim.

By measuring the weight of the contents of the containers, or at least of a parameter derived from this weight, it can be determined easily when a container needs to be refilled. The signal from the weight sensors is used for automatically ordering replenishments. This dispenses with the need for human monitoring, which simplifies the maintenance of the storage and ensures that all replenishments arrive in time.

The replenishments are provided with tags identifying the container they belong to. The tags are applied by the supplier, who can easily generate them from the data in his database, This simplifies the task for replenishing at the storage site.

Preferably, the time dependence of the parameter is determined, e.g. by calculating the rate of weight decrease. This information can be used for extrapolating the parameter and predict the time when replenishing is required. Hence, it is possible to order a replenishment in advance such that it arrives just in time for refilling the near empty container.

The signals from the weight sensors can be used for determining if a replenishment has taken place. Such a replenishment is recognised by a weight increase. This provides a feedback for monitoring correct replenishing.

In a preferred embodiment, the weight of each container (or data derived therefrom) is electronically transmitted to a remote supplier. The supplier can thus monitor the whole storage and determine the need for replenishments.

Further preferred embodiments of the invention as well as applications thereof can be found in the dependent claims and in the following description and figures, wherein:
Fig. 1 shows an embodiment of the invention comprising a rack with several containers, and
Fig. 2 is a block diagram of a system operating in accordance to the invention.

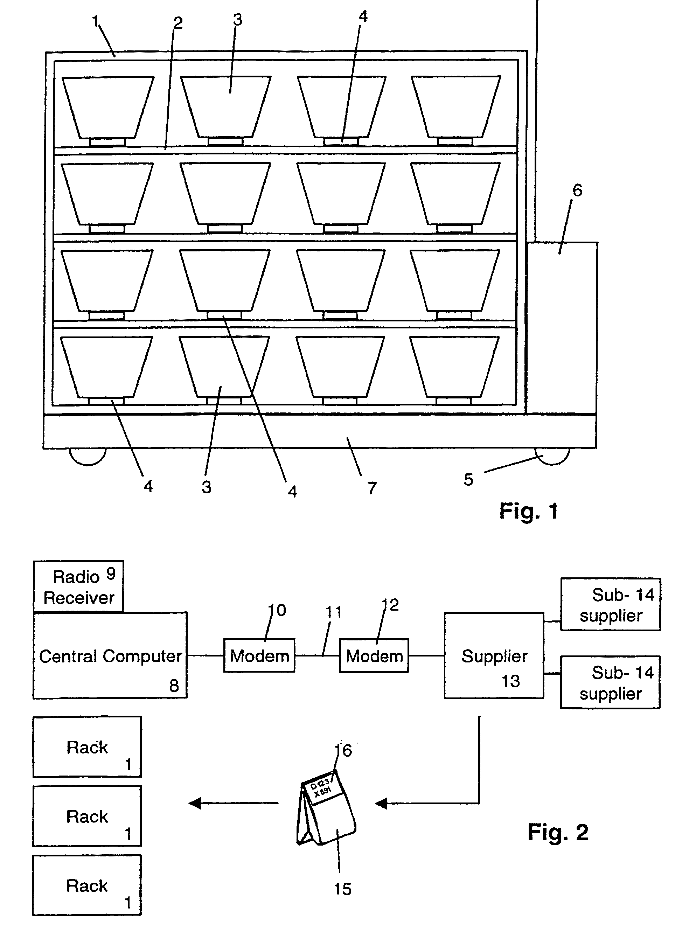

A preferred embodiment of the invention is shown in Figs. 1 and 2. It comprises a plurality of racks 1, such as the one shown in Fig. 1. Each rack 1 contains a plurality of shelves 2 and carries a large number of individual containers (bins) 3. Rack 1 is mounted on a carriage 7 with wheels 5, such that it can e.g. be stationed in any suitable place of a factory.

Each container 3 holds a stock of small items, such as screws, bolts, nuts, fasteners, pills, transistors, etc. These items are continually removed during normal use of the storage rack, e.g. for assembling or packaging.

As can be seen from Fig. 1, each container 3 is mounted on a weight sensor 4. These sensors can e.g. be based on conventional strain gauges or capacitive deformation detectors. In the present embodiment, the weight sensors measure the gross weight of each container, i.e. the weight of the container itself and of its contents. Each weight sensor 4 generates a measuring signal indicative of the gross weight.

In Fig. 1, the containers 3 are mounted on top of the weight sensors. Depending on the design and shape of the rack and the containers, other arrangements can be used. For example, the containers could be hanging between two horizontal rods, wherein the weight sensor would be arranged between one of the rods and the container.

The signals from the weight sensors 4 are transmitted to a radio emitter 6 mounted to rack 1. Radio emitter 6 sends the signals to a central computer 8 equipped with a suitable radio receiver 9 (see Fig. 2).

Alternatively, rack 1 can be equipped with an infrared transmitter that communicates with several infrared light sensors arranged in the building housing the storage racks 1. Also, individual transmitters could be provided for each container 3.

Central computer 8 analyses the signals from emitter 6 as described below for determining if a container needs replenishing. If this is the case, central computer 8 issues an order for the corresponding article, which is transmitted via modem 10 of central computer 8, the public phone net 11 to a modem 12 of a supplier 13. Supplier 13 then delivers the appropriate articles 15 to the site of racks 1.

Alternatively, central computer 8 transmits the weight data of each container 3 to supplier 13 repeatedly, e.g. once a day. In this case, it is supplier 13 who determines if a container needs replenishing. This has the advantage that the whole operation is fully transparent for the storage operator. Central computer 8 of the storage operator merely serves for forwarding the data from the containers 3 to the supplier 13. The hard-and software for managing the storage resides at the supplier's site. One supplier can manage a plurality of storage sites using the same hard- and software.

Once a need for replenishing is detected, supplier 13 can either procure the necessary article(s) 15 by itself or it can forward corresponding orders to sub-suppliers 14. Supplier 13 (or sub-suppliers 14) attach a tag 16 to each delivered article. This tag 16 identifies the container the article 15 is to be delivered to, e.g. by indicating a unique rack and container ID.

The ordered articles 15 are delivered to the storage site where they are filled into the containers 3 as indicated on tag 16.

The weight of a container 3 increases upon refilling. Hence, sampling the containers' weights provides a means for monitoring if replenishing has taken place. In a preferred embodiment, supplier 13 remotely monitors the weights of the containers. When a refill is ordered for a container, supplier 13 can check if and when the refill arrives at the container by waiting for an appropriate weight increase. If no such weight increase occurs within a predetermined period of time, supplier 13 knows that the refill has not been carried out correctly.

In the same manner, the present system can check if the weight of a container increases even if no refill has been ordered. If such an unmotivated weight increase is detected, supplier 13 can e.g. alert the storage operator to check the contents of the given container.

Central computer 8 or supplier 13 can use various methods for determining the time for reordering articles.

In a simple embodiment, the weight wᵢ of each container 3 (where i stands for the container index) is compared with a threshold value w_{th,i} for the container. The threshold value w_{th,i} is predefined for each container and depends on the weight of the articles stored in the container and the size of the container, the expected usage rate and the delivery time for replenishments. For instance, the value is set to the gross weight the container has when it is filled to 10%. Once central computer 8 finds that the weight of the container falls below the threshold value, an order for replenishment is issued.

It must be noted that in order to carry out this simple embodiment of the invention, it is not required that the sensors 4 provide signals indicative of the absolute weight of the containers 3. Alternatively, sensors 4 could deliver digital signals that are e.g. 0 if the weight of the container is above its threshold value and 1 if it is below it. Sensors of this type can be of a simple design and e.g. consist of a spring mounted support for the container and a switch actuated if the weight of the container 3 is sufficient to push said support to a predefined position.

In a preferred embodiment, the gross weight of the containers 3 is monitored as a function of time. For each container 3, central computer 8 and/or supplier 13 stores the gross weight wᵢ(t₁) at time t₁. At a later time t₂, the weight wᵢ(t₂) is measured again and the rate of weight decrease is determined from (wᵢ (t₂ )-wᵢ (t₁))/(t₂ - t₁). This rate is used for an extrapolation of wᵢ to predict the time tₜₕ when wᵢ(tₜₕ) reaches the threshold value w_{th,i} for this container. (This threshold value can be a net weight of 0.) The order for replenishing the container is issued at a time t_{order} when tₜₕ draws near, i.e. the order is issued when tₜₕ - t_{order} falls below a given value tₒₜ. The order time tₒₜ is determined by the time it takes to deliver a replenishment from supplier 13 to the site of racks 1.

In a more elaborate method, the weight wᵢ(t) of each container is stored as a function of a larger number of time values and extrapolation is carried out by linear or non-linear regression or time series analysis.

As mentioned above, since each container 3 may contain different articles of different weights, a threshold value w_{th,i} for each container i must be stored in central computer 8 or at the suppliers's site. When the type of articles in a container is changed, the threshold value must be readjusted accordingly.

It must be noted that the invention can be carried out in various ways and is not limited to the embodiment shown in Figs. 1 and 2.

For instance, there is no need to equip all containers 3 of rack 1 with weight sensors. Some conventional bins can be provided for holding articles that are not monitored automatically.

Rack 1 can also be stationary, depending on how it is to be used. In this case, radio emitter 6 and radio receiver 9 can be dispensed with and permanent transmission cables can be located between rack 1 and central computer 8.

Instead of using a rack as shown, the weight sensors can also be installed at storage sites of an automated warehouse, e.g. in a paternoster. They can also carry or be integrated in pallets for carrying larger or heavier loads.

Also, at least part of the functions of central or supplier 13 could be located in the rack 1 such that rack 1 determines itself if one of its containers needs replenishing and only then contacts central computer 8. Alternatively, part of the functions of central computer 8 could be located at the site of supplier 13, as it has been explained above.

The present invention is suited for any types of articles that can be stored in a container (or, equivalently, on a roll or tablet) and that is being used up or consumed gradually. In particular, the system can e. g. be applied to a storage of liquid or granular goods.

## Claims

1. A method for maintaining a storage, wherein said storage comprises a plurality of containers (3), comprising the steps of
measuring, for each of said containers (3), a parameter (wᵢ) depending on the weight of the contents of the container
determining from said parameter (wᵢ) the need for replenishing the container,
automatically ordering replenishments for containers in need of replenishing by transmitting data derived from said parameter to at least one supplier (13),
procuring said replenishments (15) and
delivering said replenishments to said storage, **characterized in that**
each replenishment is tagged by said supplier with a tag (16) which identifies the container the replenishment is to be delivered to by indicating a unique container ID.

2. The method of claim 1 wherein said parameter (wᵢ) is the gross or net weight of each container.

3. The method of one of the preceding claims, comprising the steps of measuring a time dependence of said parameter (wᵢ) and extrapolating said parameter.

4. The method of claims 2 and 3 comprising the step of determining the rate of decrease of said gross or net weight and using said rate for extrapolating said weight.

5. The method of claims 3 or 4 comprising the step of predicting a limit-time (tₜₕ) at which said parameter reaches a given limit and flagging a need for replenishing if said limit-time is closer than a given order-time (tₒₜ) from the present.

6. The method of any of the preceding claims wherein the weight of each of said containers is transmitted repeatedly to said supplier (13).

7. The method of claim 6 wherein said supplier (13) derives said need for replenishing a container from the weight of said container.

8. The method of one of the preceding claims further comprising the steps of
delivering said replenishments, and
monitoring a weight increase for containers to be replenished for confirming correct delivery to said containers to be replenished.

9. The method of one of the claims 7 or 8 further comprising the steps of
monitoring, by said supplier (13), a weight increase for containers to be replenished for confirming correct delivery to said containers to be replenished.

## Patentansprüche

1. Ein Verfahren zum Führen eines Lagers, wobei das Lager eine Mehrzahl von Behältern (3) aufweist, enthalten die Schritte
für jeden der Behälter (3) ein Parameter (wᵢ) messen, der vom Gewicht des Inhaltes der Behälter abhängt;
von diesem Parameter (wᵢ) die Notwendigkeit zum Nachfüllen des Behälters bestimmen;
automatisch Nachfüllungen für Nachfüllungen benötigende Behälter bestellen, indem von diesem Parameter abgeleitete Daten wenigstens einem Lieferanten (13) übermittelt werden,
beschaffen der Nachfüllungen (15) und
liefern dieser Nachfüllungen zum Lager, **dadurch gekennzeichnet, dass**
jede Nachfüllung vom Lieferanten mit einer Etikette (16) ausgerüstet wird, welche den Behälter, dem die Nachfüllungen geliefert werden muss, durch eine eindeutige Behälterangabe (1) identifiziert.

2. Verfahren nach Anspruch 1, wobei der Parameter ((wᵢ) das Brutto- oder Nettogewicht jedes Behälters ist.

3. Verfahren nach einem der vorangehenden Ansprüche, enthaltend die Schritte eine Zeitabhängigkeit des Parameters (wᵢ) messen und den Parameter extrapolieren.

4. Verfahren nach den Ansprüchen 2 und 3, enthaltend den Schritt des Ausmasses der Abnahme des Brutto- oder Nettogewichtes feststellen und diese Abnahme zum Extrapolieren des Gewichtes benützen.

5. Verfahren nach Anspruch 3 oder 4, enthaltend den Schritt eine Zeitgrenze (tₜₕ) voraussagen, bei welcher der Parameter eine gegebene Grenze erreicht, und eine Notwendigkeit für ein Nachfüllen kenntlich machen, wenn diese Zeitgrenze näher ist als ein vorgegebener Bestellungszeitpunkt (tₜₒₜ) als die gegenwärtige.

6. Verfahren nach einem der vorangehenden Ansprüche, wobei das Gewicht jedes Behälters wiederholt dem Lieferanten (13) übermittelt wird.

7. Verfahren nach Anspruch 6, wobei der Lieferant (13) die Notwendigkeit, einen Behälter nachzufüllen, vom Gewicht des Behälters ableitet.

8. Verfahren nach einem der vorangehenden Ansprüche, weiter enthaltend die Schritte
Liefern der Nachfüllungen, und
die Gewichtszunahme von
nachzufüllenden Behältern überwachen, um eine korrekte Lieferung zu den nachzufüllenden Behältern zu bestätigen.

9. Verfahren nach einem der Ansprüche 7 oder 8, weiter enthaltend die Schritte
beim Lieferanten (13) eine Gewichtszunahme der nachzufüllenden Behälter überwachen, um eine korrekte Lieferung zu den nachzufüllenden Behältern zu bestätigen.

## Revendications

1. Procédé de gestion d'une armoire de rangement, dans lequel ladite armoire de rangement comprend une pluralité de récipients (3), lequel procédé comprend les étapes qui consistent à:
sur chacun desdits récipients (3), mesurer un paramètre (wᵢ) qui est une fonction du poids du contenu du récipient,
à partir dudit paramètre (wᵢ), déterminer s'il faut réassortir le récipient,
commander automatiquement le réassort des récipients qui doivent être réassortis en transmettant des données dérivées dudit paramètre à au moins un fournisseur (13),
obtenir lesdits réassorts (15) et
délivrer lesdits réassorts à ladite armoire de rangement,
**caractérisé en ce que**:
chaque réassort est étiqueté par ledit fournisseur à l'aide d'une étiquette (16) qui identifie le récipient qui doit être réassorti en indiquant une identification univoque de récipient.

2. Procédé selon la revendication 1, dans lequel ledit paramètre (wᵢ) est le poids brut ou le poids net de chaque récipient.

3. Procédé selon l'une quelconque des revendications précédentes, qui comprend les étapes qui consistent à mesurer la dépendance dudit paramètre (wᵢ) par rapport au temps et à extrapoler ledit paramètre.

4. Procédé selon les revendications 2 et 3, qui comprend les étapes qui consistent à déterminer le taux de diminution dudit poids brut ou net et à utiliser ledit taux pour extrapoler ledit poids.

5. Procédé selon les revendications 3 ou 4, qui comprend les étapes qui consistent à prédire un instant-limite (tₜₕ) auquel ledit paramètre atteint une limite donnée et à signaler la nécessité du réassortiment lorsque ledit instant-limite est plus proche de l'instant présent qu'un instant de commande (tₒₜ) donné.

6. Procédé selon l'une quelconque des revendications précédentes, dans lequel le poids de chacun desdits récipients est transmis de manière répétée audit fournisseur (13).

7. Procédé selon la revendication 6, dans lequel ledit fournisseur (13) déduit ladite nécessité du réassortiment d'un récipient à partir du poids dudit récipient.

8. Procédé selon l'une quelconque des revendications précédentes, qui comprend en outre les étapes qui consistent à:
livrer lesdits réassorts et
surveiller l'augmentation de poids des récipients à réassortir pour confirmer le réassortiment correct desdits récipients.

9. Procédé selon l'une quelconque des revendication 7 ou 8, qui comprend en outre l'étape qui consiste à:
faire surveiller par ledit fournisseur (13) l'augmentation de poids des récipients à réassortir pour confirmer le réassortiment correct desdits récipients.
